(19) **Europäisches Patentamt**

**European Patent Office**

**Office européen des brevets**

(11) **EP 1 454 881 A1**

(12) **EUROPÄISCHE PATENTANMELDUNG**

(43) Veröffentlichungstag:
**08.09.2004 Patentblatt 2004/37**

(51) Int Cl.⁷: **C01B 31/22**, C12F 3/02

(21) Anmeldenummer: **04005412.4**

(22) Anmeldetag: **08.03.2004**

(84) Benannte Vertragsstaaten:
**AT BE BG CH CY CZ DE DK EE ES FI FR GB GR
HU IE IT LI LU MC NL PL PT RO SE SI SK TR**
Benannte Erstreckungsstaaten:
**AL LT LV MK**

(30) Priorität: **07.03.2003 DE 10310411**

(71) Anmelder: **RCH Holding AG
6300 Zug (CH)**

(72) Erfinder: **Niewolik, Raimund
47495 Rheinberg (DE)**

(74) Vertreter: **Wolff, Felix, Dr. et al
Kutzenberger & Wolff
Theodor-Heuss-Ring 23
50668 Köln (DE)**

(54) **Brauereiprozess**

(57) Die Erfindung betrifft einen Brauereiprozess, bei dem das bei der alkoholischen Gärung entstehende Kohlendioxid gesammelt und verflüssigt sowie bevorzugt noch auf dem Gelände der Brauerei zu Trockeneis weiterverarbeitet wird.

Fig. 1

**Beschreibung**

Die Erfindung betrifft einen Brauereiprozess, bei dem das bei der Gärung entstehende Kohlendioxid ($CO_2$) gesammelt, weiterverwendet und weiterverarbeitet wird.

Bei der Herstellung von Bier fallen in den Brauereien große Mengen Kohlendioxid, ungefähr 2,5 kg je 100 Liter erzeugten Biers, an. Dieses Kohlendioxid wurde in der Vergangenheit gesammelt und zumindest teilweise als Inertgas in den Flüssigkeitsleitungen der Brauereien, insbesondere bei der Abfüllung des Biers in Fässer, Flaschen oder Dosen verwendet.

Das Kohlendioxid wird zu diesem Zweck in einer Rückverflüssigungsanlage unter einem Druck von etwa 20 bar oder mehr in den flüssigen Aggregatzustand überführt und in Tanks gespeichert, anschließend bei Bedarf als Inertgas verwendet.

Jedoch wird nur ein Teil des anfallenden Kohlendioxids als Inertgas verwendet, so dass ein Überschuss von etwa 0,5 $CO_2$ je gebrautem Hektoliter Bier verbleibt. Dieser Überschuss wurde in der Vergangenheit in die Umwelt entlassen oder aber in flüssigem Zustand abtransportiert.

Der Transport des flüssigen Kohlendioxids ist jedoch aufwendig und kostenintensiv, da das Flüssiggas als Gefahrgut eingestuft ist und daher nur unter strengen Auflagen transportiert werden darf. Zudem erfordert der Transport des Kohlendioxids über die Straße oder die Schiene die Bereitstellung großer und aufwendiger Lagerkapazitäten beispielsweise beim Erzeuger und bei einem Trockeneishersteller, da der Abtransport nur diskontinuierlich erfolgen kann und eine Lagerung in Druckbehältern erfordert. Diese Behälter unterliegen ebenfalls der Gefahrgutverordnung.

Es war daher eine Aufgabe der Erfindung, ein Verfahren zur Weiterverwendung und Weiterverarbeitung von beim Brauen von Bier anfallendem Kohlendioxid zur Verfügung zu stellen, welches die oben beschriebenen Nachteile des Stands der Technik nicht aufweist.

Diese Aufgabe wird durch einen Brauereiprozess mit den Merkmalen des Anspruchs 1 gelöst. Vorteilhafte Ausgestaltungen der Erfindung finden sich in den abhängigen Ansprüchen.

Es wurde in erfindungsgemäßer Weise ein Brauereiprozess geschaffen, der eine Weiterverarbeitung des überschüssigen Kohlendioxids zu Trockeneis vorzugsweise auf dem Gelände der Brauerei und bevorzugt in den Brauprozess integriert, ermöglicht. Das so erzeugte Trockeneis kann zur Kühlung von Lebensmitteln, zur Prozesskühlung oder zur Trockeneisreinigung verwendet werden. Der Brauereiprozess stellt somit eine besonders kostengünstige Möglichkeit zur Verfügung, das beim Bierbrauen anfallende Kohlendioxid an Ort und Stelle zu einem Endprodukt zu verarbeiten.

Es war dabei für den Fachmann äußerst überraschend, dass bei dem erfindungsgemäßen Brauprozess nur geringe Mengen an gasförmigem Kohlendioxid in die Umwelt entlassen werden müssen. Das erfindungsgemäße Verfahren erlaubt somit eine nahezu vollständige Verwendung und Weiterverarbeitung des überschüssigen Kohlendioxids, ohne dass gebührenpflichtige und umweltschädliche Emissionen erfolgen müssen.

Die Erfordernisse des Kreislaufwirtschaftsgesetzes können daher vollständig erfüllt werden. Darüber hinaus kann der Transport des Trockeneises mit deutlich geringerem Aufwand erfolgen. Dies folgt sowohl aus der Tatsache, dass nach der Herstellung von Trockeneis geringere Volumina transportiert werden müssen als auch daraus, dass der Transport von Trockeneis keinen besonderen Auflagen unterliegt.

Dabei wird der Prozess des Bierbrauens von der Weiterverarbeitung des Kohlendioxids nicht negativ beeinflusst; vielmehr besteht die Möglichkeit, den Prozess unabhängig von der bei der alkoholischen Gärung anfallenden Menge an Kohlendioxid durchzuführen. Vorzugsweise wird die gesamte anfallende Menge an $CO_2$ gesammelt, verflüssigt und ein Teil, vorzugsweise ca. 80 Gew.-% als Inertgas eingesetzt. Das überschüssige Kohlendioxid, vorzugsweise ca. 20 Gew.-% wird zu Trockeneis weiterverarbeitet.

Bei dem Brauereiprozess gemäß der Erfindung wird Bier in der dem Fachmann geläufigen Weise und unter Verwendung der dem Fachmann bekannten Ausgangsstoffe gebraut. Dabei wird der aus dem Malz gewonnene Zucker in einem Sudhaus zur Lösung gebracht. Unter Zugabe von Sauerstoff wächst auf dieser Lösung der zuvor zugegebene Hefepilz.

Durch einen anschließenden Entzug des Sauerstoffs setzt gemäß der Reaktion:

$$C_6H_{12}O_6 \rightarrow 2\ C_2H_5OH + 2\ CO_2$$

die alkoholische Gärung ein. Hierbei entstehen üblicherweise etwa 2,5 kg Kohlendioxid je erzeugten 100 Liter Biers.

Kohlendioxid ist nach den Verordnungen des Kreislaufwirtschaftsgesetzes ein klimagängiges Gas, wodurch die Notwendigkeit besteht, die im Werk anfallenden Mengen zu sammeln und einer Weiterverarbeitung zuzuführen. Alternativ hierzu kann auch die gebührenpflichtige Emission des Gases in die Umwelt erfolgen.

Der erfindungsgemäße Brauprozess sieht die Sammlung der gesamten bei der alkoholischen Gärung erzeugten Menge an Kohlendioxid und ihre anschließende Verflüssigung, bevorzugt in einer hierfür vorgesehenen Rückverflüssigungsanlage, vor. Hierbei erfolgt die Änderung des Aggregatzustands des Kohlendioxids von gasförmig zu flüssig unter Beaufschlagung von Druck in dafür verwendeten Druckbehältern.

Das derart verflüssigte Kohlendioxid kann anschließend in Tanks gespeichert werden und aufgrund seiner Eigenschaft als Inertgas gegenüber der transportierten Flüssigkeit als vorzugsweise konservierendes Inertgas im Brauprozess insbesondere in den Abgefüllten Gebinden eingesetzt werden.

In einer bevorzugten Ausgestaltung der Erfindung wird das Kohlendioxid als Inertgas bei der Abfüllung des gebrauten Biers in Fässer, Flaschen; Dosen oder dergleichen verwendet. Hierdurch wird in vorteilhafter Weise auch bei der Abfüllung und anschließenden Lagerung ein Kontakt des Biers mit dem Luftsauerstoff weitgehend unterbunden.

In einer weiteren bevorzugten Ausgestaltung der Erfindung wird das nicht als Inertgas verwendete Kohlendioxid im wesentlichen vollständig zu Trockeneis weiterverarbeitet.

Die Herstellung des Trockeneis erfolgt bevorzugt mittels einer vorzugsweise direkt an die Rückverflüssigungsanlage angeschlossene Trockeneispresse. Ganz besonders bevorzugt erfolgt die Herstellung des Trockeneises auf dem Gelände der Brauerei. Der Fachmann versteht dabei, dass die Trockeneisproduktion derart zu dem Brauprozess benachbart angeordnet sein muss, dass ein vorzugsweise kontinuierlicher Transport des Kohlendioxids durch Leitungen vom Brauprozess zur Trockeneisproduktion und vorzugsweise eine Rückführung des gasförmigen, nicht zu Trockeneis umgewandelten Kohlendioxides in die Rückverflüssigungsanlage möglich ist, ohne dass hierzu Tankwagen oder dergleichen verwendet werden müssten.

Bei der Trockeneisproduktion wird in einer besonders bevorzugten Ausgestaltung der Erfindung das flüssige Kohlendioxid in einem Entspannungszylinder zu Kohlendioxidschnee entspannt. Dieser Kohlendioxidschnee kann anschließend zu Trockeneis verpresst werden.

In einer ganz besonders bevorzugten Ausgestaltung des erfindungsgemäßen Brauereiprozesses wird das bei der Trockeneisherstellung entstehende gasförmige Kohlendioxid wiederum gesammelt und rückverflüssigt und schließlich ebenfalls zu Trockeneis weiterverarbeitet. In einer überaus bevorzugten Ausgestaltung der Erfindung werden so mehr als 90 %, vorzugsweise mehr als 95 % des überschüssigen; d.h. nicht als Inertgas verwendeten Kohlendioxids zu Trockeneis verarbeitet.

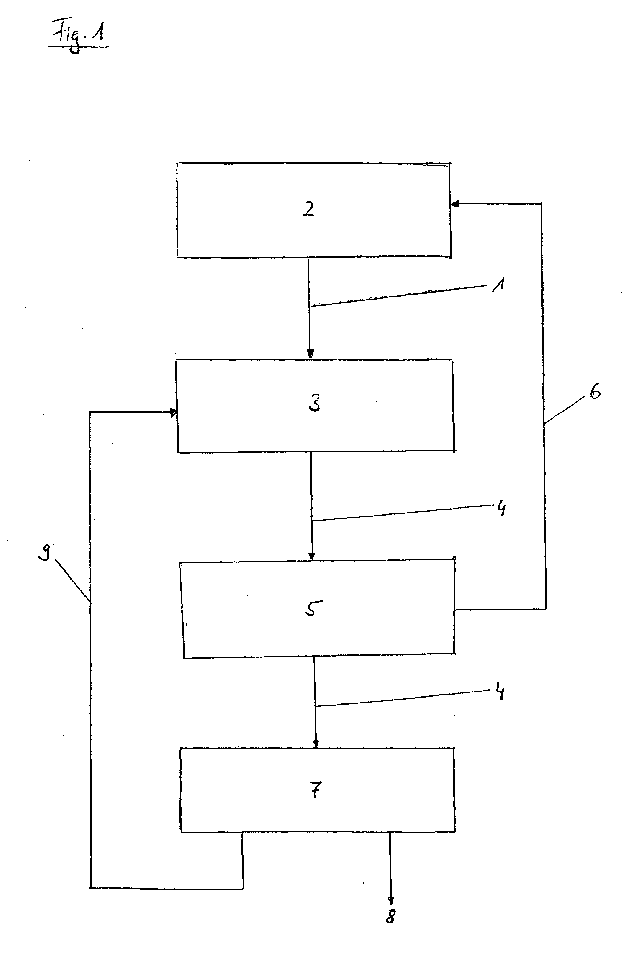

Die Erfindung wird im folgenden anhand der Figur 1 näher erläutert. Diese Figur stellt jedoch lediglich eine beispielhafte Darstellung des erfindungsgemäßen Verfahrens dar und schränkt den allgemeinen Erfindungsgedanken in keiner Weise ein.

Figur 1 zeigt ein Flussdiagramm des erfindungsgemäßen Brauprozesses.

In Figur 1 wird ein Flussdiagramm für das bei der alkoholischen Gärung in Brauereien entstehende Kohlendioxid gezeigt. Das gasförmige Kohlendioxid wird als Prozessgas 1 aus dem Brauprozess 2 in eine Rückverflüssigungsanlage 3 geleitet und hierin unter einem Druck von mehr als 20 bar zu Flüssiggas 4 verarbeitet. Dieses Flüssiggas 4 wird in speziellen Flüssiggastanks 5 gespeichert und vorzugsweise ca. 80% als Inertgas 6 bei der Abfüllung der diversen Gebinde verwendet. Dieses Kohlendioxid verbleibt vorzugsweise zum größten Teil in den Gebinden. Das nicht als Fördergas 6 verwendete Flüssiggas 4 wird in die Trockeneisproduktion 7 gepumpt, in der das Flüssiggas 4 mittels eines Entspannungszylinders zu Kohlendioxidschnee weiterverarbeitet wird, welcher anschließend zu Trockeneis 8 verpresst wird. Hierbei werden etwa 40 % des Flüssiggases 4 zu Trockeneis 8 verarbeitet. Das bei der Trockeneisproduktion 7 entstehende gasförmige Kohlendioxid 9 wird gesammelt, im Kreislauf in die Rückverflüssigungsanlage 3 geleitet und schließlich erneut in die Trockeneisproduktion 7 geführt. Durch diese Kreislaufführung werden schließlich 97 % des nicht als Inertgas benötigten Prozessgases 1 zu Trockeneis 8 verarbeitet.

Liste der Bezugszeichen

| | |
|---|---|
| 1 | Prozessgas |
| 2 | Brauprozess |
| 3 | Rückverflüssigungsanlage |
| 4 | Flüssiggas |
| 5 | Flüssiggastank |
| 6 | Fördergas |
| 7 | Trockeneisproduktion |
| 8 | Trockeneis |
| 9 | gasförmiges Kohlendioxid aus der Trockeneisproduktion |

**Patentansprüche**

1. Brauereiprozess, bei dem das bei der alkoholischen Gärung entstehende Kohlendioxid ($CO_2$) gesammelt, verflüssigt und teilweise zu Trockeneis weiterverarbeitet wird.

2. Brauereiprozess nach Anspruch 1, **dadurch gekennzeichnet, dass** ca. 20% des entstehenden $CO_2$ zu Trockeneis verarbeitet werden.

3. Brauereiprozess nach einem der voranstehenden Ansprüche, **dadurch gekennzeichnet, dass** die Verflüssigung des gasförmigen $CO_2$ in einer Rückverflüssigungsanlage erfolgt.

4. Brauereiprozess nach einem der voranstehenden Ansprüche, **dadurch gekennzeichnet, dass** das Trockeneis durch Entspannung des flüssigen $CO_2$ zu Kohlendioxidschnee mittels eines Entspannungszylinders, und ein anschließendes Verpressen des Kohlendioxidschnees zu Trockeneis erfolgt.

5. Brauereiprozess nach einem der voranstehenden Ansprüche, **dadurch gekennzeichnet, dass** das Abgas aus der Trockeneisproduktion im wesentlichen gesammelt, wieder verflüssigt und anschließend erneut zur Trockeneisproduktion verwendet wird.

6. Brauereiprozess nach einem der voranstehenden Ansprüche, **dadurch gekennzeichnet, dass** das Trockeneis zur Kühlung von Lebensmitteln, zur Prozesskühlung und/oder zur Trockeneisreinigung verwendet wird.

Fig. 1

**Europäisches Patentamt**

# EUROPÄISCHER RECHERCHENBERICHT

Nummer der Anmeldung

EP 04 00 5412

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 2 570 074 A (RUPP WALTER H) 2. Oktober 1951 (1951-10-02) * Spalte 2, Zeile 47 - Spalte 3, Zeile 34; Abbildung 2 * --- | 1-6 | C01B31/22 C12F3/02 |
| X | GB 727 587 A (LINDE EISMASCH AG) 6. April 1955 (1955-04-06) | 1,2,6 | |
| Y | * Spalte 1, Zeile 10 - Zeile 13 * * Spalte 2, Zeile 3 - Zeile 8 * --- | 3-5 | |
| X | WO 86/04357 A (UNIV QUEENSLAND) 31. Juli 1986 (1986-07-31) | 1,2,6 | |
| Y | * Seite 10, Zeile 30 - Zeile 33 * --- | 3-5 | |
| Y | PATENT ABSTRACTS OF JAPAN vol. 2000, no. 07, 29. September 2000 (2000-09-29) & JP 2000 119013 A (NIPPON SANSO CORP), 25. April 2000 (2000-04-25) * Zusammenfassung * ----- | 3-5 | |

| | | | RECHERCHIERTE SACHGEBIETE (Int.Cl.7) |
|---|---|---|---|
| | | | C01B C12F |

Der vorliegende Recherchenbericht wurde für alle Patentansprüche erstellt

| Recherchenort | Abschlußdatum der Recherche | Prüfer |
|---|---|---|
| MÜNCHEN | 17. Mai 2004 | Smeets, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

..........................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 04 00 5412

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-05-2004

| Im Recherchenbericht angeführtes Patentdokument | Datum der Veröffentlichung | Mitglied(er) der Patentfamilie | Datum der Veröffentlichung |
|---|---|---|---|
| US 2570074 A | 02-10-1951 | KEINE | |
| GB 727587 A | 06-04-1955 | DE 890633 C | |
| WO 8604357 A | 31-07-1986 | AU 603333 B2 | 15-11-1990 |
| | | AU 5397086 A | 13-08-1986 |
| | | WO 8604357 A1 | 31-07-1986 |
| | | BR 8606997 A | 01-12-1987 |
| | | DD 241612 A5 | 17-12-1986 |
| | | EP 0247044 A1 | 02-12-1987 |
| | | ES 8702327 A1 | 16-03-1987 |
| | | GB 2191503 A | 16-12-1987 |
| | | JP 62502166 T | 27-08-1987 |
| | | NL 8600158 A | 18-08-1986 |
| | | NZ 214933 A | 29-09-1988 |
| | | ZA 8600505 A | 26-11-1986 |
| | | ZW 1586 A1 | 27-08-1986 |
| | | MW 1086 A1 | 13-05-1987 |
| JP 2000119013 A | 25-04-2000 | KEINE | |

EPO FORM P0461

Für nähere Einzelheiten zu diesem Anhang : siehe Amtsblatt des Europäischen Patentamts, Nr.12/82